(19) Europäisches Patentamt
European Patent Office
Office européen des brevets

(11) **EP 3 920 494 A1**

(12) **EUROPEAN PATENT APPLICATION**

(43) Date of publication:
**08.12.2021 Bulletin 2021/49**

(51) Int Cl.:
**H04L 25/03** (2006.01)

(21) Application number: **20178433.7**

(22) Date of filing: **05.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
- LEFEVRE, Yannick
  **2018 Antwerp (BE)**
- LANNEER, Wouter
  **2018 Antwerpen (BE)**

(74) Representative: **Louis Pöhlau Lohrentz Patentanwälte Postfach 30 55 90014 Nürnberg (DE)**

(54) **METHOD AND APPARATUS FOR REDUCING DFE-INDUCED ERROR PROPAGATION IMPACT ON SOFT-INPUT DECODING**

(57)    The present invention discloses a method in a receiver of a communication link, comprising: performing decision feedback equalization for received samples that are binary modulated, obtaining equalized samples; determining a modified log-likelihood ratio value corresponding to a current sample based at least on a value related to the equalized sample corresponding to the current sample and a respective modified log-likelihood ratio value corresponding to at least one previous sample; and decoding the current sample based on the modified log-likelihood ratio value corresponding to the current sample.

Fig. 3

EP 3 920 494 A1

**Description**

Field of the invention

Various example embodiments relate to a method and a receiver for receiving signals in a communication link.

Background

Next-generation passive optical networks (PONs) are used to deliver broadband access. PON systems have a point-to-multi-point (P2MP) topology, in which one optical line terminal (OLT) at the network side is used to connect to a multitude (e.g., up to 64) of optical network units (ONUs) at the user side by means of an optical distribution network (ODN) or fiber plant that contains optical fibers and splitters, but no active components. It is noted that, pertaining to the present disclosure, the terminology ONU and ONT for Optical Network Terminal may be used interchangeably.

Due to cost reasons, it is expected that next-generation passive optical networks (PON) standards will employ bandwidth-limited reception. For instance, 50G PON may be received using 25G optics, while 25G PON may be received using 10G optics. Such bandwidth limitation causes significant inter-symbol-interference (ISI), i.e., received samples do not only depend on the corresponding transmitted symbol, but are also affected by the previous and/or following symbols.

In addition, due to the increased line rate speeds, next-generation PON systems will be more strongly affected by chromatic dispersion due to the fiber propagation, leading to even more ISI.

While for lower-rate PON technologies, the impact of ISI is small and hence can easily be dealt with or even neglected, this does not hold anymore for 25G/50G PON systems due to the reasons listed above (bandwidth-limited reception and increased impact of dispersion). As a result, to recover the symbols that are corrupted by ISI and enable reliable communication, next-generation PON technologies may use an (electrical) analog-to-digital converter (ADC) at the receiver in combination with digital signal processing (DSP)-based channel equalization techniques.

Channel equalization is a well-known DSP technique to mitigate ISI in digital communication systems. A near-optimal approach consists of Maximum Likelihood Sequence Estimation or MLSE in case of a hard-output equalizer or BCJR in case of a soft-output equalizer. However, the computational complexity of this approach grows exponentially with the channel dispersion time. A suboptimum approach consists of applying a linear transversal filter to the received samples. This filter structure has a computational complexity that grows linearly with the channel dispersion time and is commonly referred to as a Feed-Forward Equalizer, also known as FFE. An alternative equalizer that is commonly used is the Decision Feedback Equalizer or DFE, which is a nonlinear channel equalizer. It employs both a feedforward and feedback filter. The input to the feedforward filter are the received samples, whereas the feedback filter has as its input decisions on previously equalized received samples.

An important drawback of the DFE is error propagation which occurs if erroneous decisions are inputted to the feedback filter. There are several ways to deal with this error propagation.

One approach is to move the DFE to the transmitter and basically apply a form of nonlinear precoding, which always uses the correct symbols and hence does not suffer from error propagation. However, this approach is not possible in PON technologies, as it requires modifications to the transmitter.

Other approaches try to mitigate the error propagation itself. For instance, by having multiple DFEs running in parallel and comparing their errors, as disclosed by E. Dahlman and B. Gudmundson. This introduces significant complexity.

Summary of the Invention

According to the state of the art, the impact of DFE error propagation is dealt with high complexity.

Thus, an objective of the invention is to reduce the impact of DFE error propagation with low complexity.

The object of the invention is achieved by the method and apparatus according to the claims.

According to one aspect of the present invention, there is provided a method in a receiver of a communication link, comprising: a) performing decision feedback equalization for received samples that are binary modulated, obtaining equalized samples; b) determining a modified log-likelihood ratio value corresponding to a current sample based at least on a value related to the equalized sample corresponding to the current sample and a respective modified log-likelihood ratio value corresponding to at least one previous sample; and c) decoding the current sample based on the modified log-likelihood ratio value corresponding to the current sample.

In one embodiment, the modified log-likelihood ratio value corresponding to the current sample has a smaller or equal magnitude than a log-likelihood ratio value corresponding to the current sample, and same sign as the log-likelihood ratio value corresponding to the current sample.

In one embodiment, the modified log-likelihood ratio value corresponding to the current sample is determined further based on a predetermined coefficient corresponding to respective one of the at least one previous sample.

In one embodiment, the predetermined coefficient is related to the feedback coefficient used in the decision feedback equalization for the respective previous sample to calculate the equalized sample corresponding to the current sample.

In one embodiment, the number of previous samples is less or equal to the number of feedback coefficients in the decision feedback equalization.

In one embodiment, the value related to the equalized sample corresponding to the current sample is a log-likelihood ratio value corresponding to the current sample or the equalized sample corresponding to the current sample.

In one embodiment, the number of previous samples is more than 1, and step b) is implemented by: sequentially determining at least one intermediate result based on the value related to the equalized sample corresponding to the current sample or a previous intermediate result and the modified log-likelihood ratio value corresponding to a previous sample selected from at least two previous samples according to a predetermined sequence; determining the modified log-likelihood ratio value corresponding to the current sample based on the last intermediate result and the modified log-likelihood ratio value corresponding to the last sample selected from the at least two previous samples according to the predetermined sequence.

In one embodiment, the predetermined sequence is determined based on positions of the at least two previous samples.

In one embodiment, the predetermined sequence is determined based on the absolute values of the predetermined coefficients corresponding to respective ones of the at least two previous samples.

In one embodiment, the method further comprises determining the modified log-likelihood ratio value corresponding to the current sample and intermediate results for at least one subsequent sample in parallel.

According to another aspect of the present invention, there is provided areceiver, comprising: a decision feedback equalizer, configured to perform decision feedback equalization for received samples that are binary modulated, obtaining equalized samples; a determining module, configured to determine a modified log-likelihood ratio value corresponding to a current sample based at least on a value related to the equalized sample corresponding to the current sample and a respective modified log-likelihood ratio value corresponding to at least one previous sample; a decoder, configured to decode the current sample based on the modified log-likelihood ratio value corresponding to the current sample.

In one embodiment, the modified log-likelihood ratio value corresponding to the current sample has a smaller or equal magnitude than a log-likelihood ratio value corresponding to the current sample, and same sign as the log-likelihood ratio value corresponding to the current sample.

In one embodiment, the determining module is configured to: determine the modified log-likelihood ratio value corresponding to the current sample further based on a predetermined coefficient corresponding to respective one of the at least one previous sample.

In one embodiment, the determining module is configured to: sequentially determine at least one intermediate result based on: the value related to the equalized sample corresponding to the current sample or a previous intermediate result, and the modified log-likelihood ratio value corresponding to a previous sample selected from at least two previous samples according to a predetermined sequence; determine the modified log-likelihood ratio value corresponding to the current sample based on the last intermediate result and the modified log-likelihood ratio value corresponding to the last sample selected from the at least two previous samples according to the predetermined sequence.

According to another aspect of the present invention, there is provided an optical line terminal or an optical network unit, comprising a receiver according to the present application.

The aforementioned embodiments of the method correspond with similar embodiments of apparatus.

According to the present invention, the impact of DFE error propagation on the performance of a soft-input decoder based on log-likelihood ratio values can be reduced by postprocessing the DFE output, Due to its postprocessing nature, the output provided by the conventional DFE equalizer component can still be improved or corrected based on the presented invention, without requiring modifications to the equalizer (knowledge of the DFE coefficients is sufficient). According to the present invention, a soft-input decoder also has a better performance.

Brief description of the figures

Fig.1 depicts a schematic block diagram of a network topology according to the present application;
Fig. 2 depicts a schematic block diagram of a commonly used decision feedback equalizer;
Fig. 3 depicts a schematic block diagram of the method according to an embodiment of the present invention;
Fig. 4 depicts a schematic block diagram of implementing the determining function according to an embodiment of the present invention;
Fig. 5 depicts a schematic block diagram of implementing the determining function according to another embodiment of the present invention;
Fig. 6 depicts a schematic block diagram of implementing the determining function according to another embodiment of the present invention;
Fig. 7 depicts a schematic block diagram of implementing the determining function according to yet another embodiment of the present invention;
Fig. 8a and 8b show the probability distribution of llr values with and without llr smoothing;
Fig. 9 depicts a block diagram of receiver according to an embodiment of the present invention.

Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps are not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

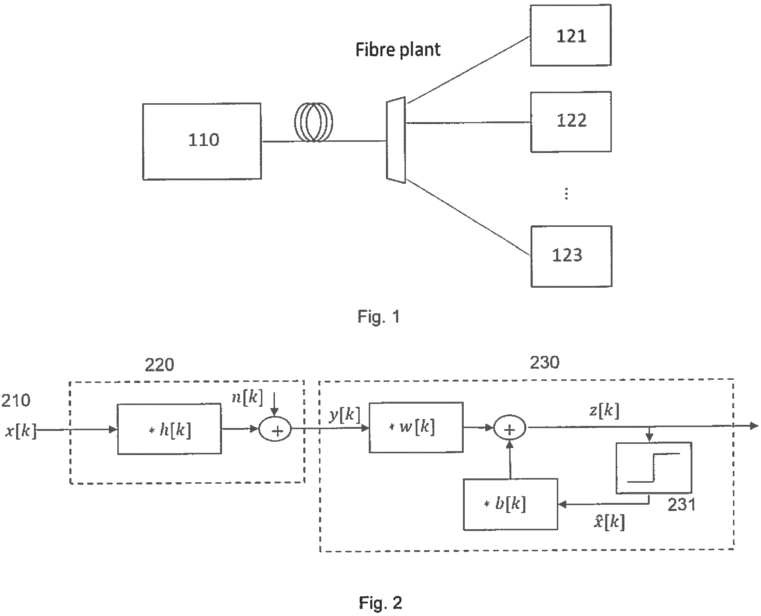

Fig.1 shows a schematic block diagram of a network topology according to the present application.

As shown in Fig. 1 in a PON, an OLT 110 at the network side is used to connect to a plurality of optical network units (ONUs) 121, 122, ..., 123 at the user side by means of an optical distribution network (ODN) or fiber plant that contains optical fibers and splitters, but no active components.

Most PON technologies such as G-PON, E-PON, and XGS-PON are time-division multiplexing (TDM) PON technologies, in which the fiber medium is shared in time between the different ONUs. In addition, time- and wavelength-division multiplexing (TWDM) PON technologies exist, such as NG-PON2, in which multiple TDM systems at different wavelength are stacked on the same PON system. The present invention applies to both TDM and TWDM PON systems.

Fig.2 shows a schematic block diagram of a commonly used decision feedback equalizer.

In Fig. 2, the transmitter 210, for example in the OLT 110 or in an ONU 121, transmits signal x[k], with k the discrete sample index, through channel 220 to a DFE 230 in a receiver in the ONU 121 or in the OLT 110, respectively. The DFE 230 employs both a feedforward and feedback filter. In the example shown in Fig.2, non-return to zero on-off keying (NRZ-OOK) modulation is applied, meaning that two possible signal levels are transmitted. This can be modelled as a transmitted signal x[k] that takes the values +1 or -1 depending on the bit $b_k$ being transmitted. For example, a bit value $b_k$ = 0 corresponds to x[k]=+1, and a bit value $b_k$ = 1 corresponds to x[k]=-1. The transmitted signals x[k] are sent through a dispersive and noisy communication channel leading to received samples y[k], which are then processed by the DFE 230. The DFE 230 applies the feedforward filter w[k] and feedback filter b[k] according to the following formula:

$$z[k] = \sum_{l=0}^{N_{FF}-1} w[l]y[k-l] - \sum_{l=1}^{N_{FB}} b[l]\hat{x}[k-l]$$

Here $N_{FF}$ is the number of feedforward taps, and $N_{FB}$ the number of feedback taps. The estimated symbols $\hat{x}[k]$ are obtained by making sequentially a decision on the equalized samples z[k], i.e.,

$$\hat{x}[k] = sign(z[k]) = \begin{cases} -1 & if \ z[k] < 0 \\ +1 & if \ z[k] \geq 0 \end{cases}$$

In case of a linear additive white Gaussian noise (AGWN) channel, the received samples correspond to

$$y[k] = \sum_{l=0}^{v-1} h[l]x[k-l] + n[k]$$

Wherein, h[l] represents the channel's impulse response, n[k] the noise, and v the number of channel taps or length of the impulse response. The coefficients of the DFE can for instance be trained to minimize the average error

$(z[k] - x[k])^2$.

It is known that a DFE suffers from error propagation. When there is an error at the DFE output, i.e., when $\hat{x}[k]$ = sign($z[k]$) is different from the transmitted signal x[k], a wrong shift will be added to the next $N_{FB}$ symbols. This on average causes the next $N_{FB}$ symbols to have an increased error probability, thus causing a DFE to have a higher error probability than would be expected just from the additive noise variance. Further, it degrades the conventional log-likelihood ratio (llr) calculation quality.

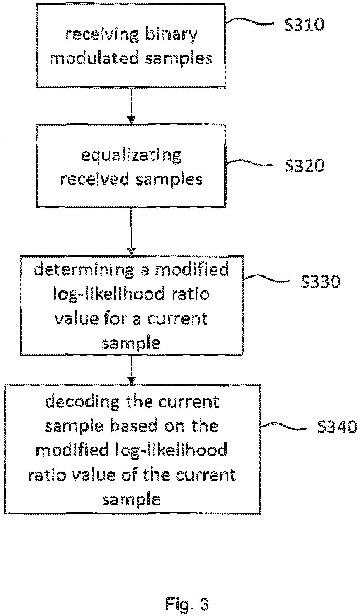

Fig. 3 shows a schematic block diagram of the method according to an embodiment of the present invention.

The method according to the present invention may be implemented in a receiver, for example a receiver in an OLT, an ONU of a PON system. Generally, the present invention applies to any receiver receiving binary modulated samples. The received samples may be modulated using for example, (N)RZ unipolar signalling or OOK, (N)RZ polar signalling, Manchester signalling, binary phase-shift keying (BPSK), or quaternary phase-shift keying (QPSK) over two orthogonal channel dimensions.

Referring to Fig. 3, the method according to the present invention starts from receiving binary modulated samples in step S310. Then the method proceeds with performing DFE for received samples in step S320. After equalization, equalized samples are obtained. Then in step S330, a modified log-likelihood ratio value corresponding to a current sample is determined based at least on a value related to the equalized sample corresponding to the current sample and a respective modified log-likelihood ratio value corresponding to at least one previous sample. Then in step S340, the current sample is decoded, for example using a soft input LDPC decoder, based on the modified log-likelihood ratio value corresponding to the current sample determined in step S330.

By post-processing the DFE output, the llr calculation quality, which is degraded by error propagation, can be improved.

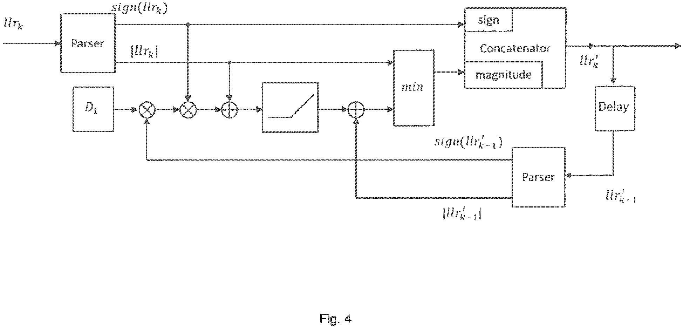

Specifically, the step S330 may be completed in different ways. In one embodiment, which will be discussed later with respect to Fig. 4, the value related to the equalized sample corresponding to the current sample may be a log-likelihood ratio value corresponding to the current sample. In another embodiment, the value related to the equalized sample corresponding to the current sample may be the equalized sample corresponding to the current sample.

As known to the skilled person, the log-likelihood ratio (llr) of the received bits is defined as:

$$llr_k = \log\left(\frac{P(b_k = 0|y)}{P(b_k = 1|y)}\right)$$

The llrs are often calculated from the received samples assuming an additive white gaussian noise (AWGN) channel model. Under this AWGN-model assumption and neglecting error propagation, the DFE output can be modelled as:

$$z[k] \approx x[k] + \tilde{n}[k]$$

with $\tilde{n}[k]$ representing the channel noise n[k] filtered by the feedforward filter w[k] as Gaussian noise. Using this model, the llr can calculated as:

$$llr_k = \frac{2z[k]}{\sigma^2}$$

with $\sigma^2$ representing the variance of $\tilde{n}[k]$.

This AWGN assumption for calculating the llr is typically used in practice, as more general models become quickly too complex for practical implementations.

Specifically, the log-likelihood ratio (llr) of the current sample $llr_k$ may be calculated based on equalized sample corresponding to the current sample. Or alternatively, the llr calculation may be absorbed into the equalization S320, the DFE may directly output llr estimates, e.g., by scaling the DFE feedforward and feedback coefficient. In yet another example, the llrs do not necessarily have to be calculated by an explicit multiplication. This can also be achieved by for example changing the discretization of the signal.

In one implementation, the receiver performs 1-tap DFE in step S320. The conventional operation of a DFE will result in the llr being calculated while making a hard decision of the previous sample or bit. In other words, $llr_k$ for bit $b_k$ will be outputted by the DFE according to the following formula:

$$llr_k = \begin{cases} \log\left(\dfrac{P(b_k = 0|b_{k-1} = 0)}{P(b_k = 1|b_{k-1} = 0)}\right) & \text{if } P(b_{k-1} = 0) \geq P(b_{k-1} = 1) \\[3mm] \log\left(\dfrac{P(b_k = 0|b_{k-1} = 1)}{P(b_k = 1|b_{k-1} = 1)}\right) & \text{if } P(b_{k-1} = 0) < P(b_{k-1} = 1) \end{cases}$$

With this value, the method proceeds with step S330 to determine a modified llr value corresponding to the current sample, in order to get a more accurate llr estimation closer to the true llr value and to reduce impact of the DFE error propagation on the llr calculation quality. The determination of the modified llr value is shown more specifically in Fig. 4.

To be accurate in case of DFE error propagation, the llr calculation should take into account the probability of the previous bit being 1 and 0. Hence, the following formula for $llr_k'$ corresponds to a more accurate llr value:

$$llr_k' = \log\left(\frac{P(b_k = 0|b_{k-1} = 0)P(b_{k-1} = 0) + P(b_k = 0|b_{k-1} = 1)P(b_{k-1} = 1)}{P(b_k = 1|b_{k-1} = 0)P(b_{k-1} = 0) + P(b_k = 1|b_{k-1} = 1)P(b_{k-1} = 1)}\right)$$

After mathematical derivation, $llr_k'$ can be by close approximation calculated from $llr_k$ and $llr_{k-1}$ using the following formula:

$$llr_k' = sign(llr_k)\min\left(|llr_k|, |llr_{k-1}'| + \max(|llr_k| + sign(llr_k)sign(llr_{k-1}')D_1, 0)\right)$$

Here the coefficient $D_1$ is related to the first DFE coefficient $b[1]$ according to:

$$D_1 = \frac{4b[1]}{\sigma^2}$$

Similar to the DFE feedback filter, this calculation should be executed sequentially over the different k indexes, as it requires the knowledge of the previous modified llr, $llr_{k-1}'$. This calculation also only requires additions, and min/max operations, and can thus be implemented with a low complexity.

Fig.4 shows a schematic block diagram of implementing the determining function according to an embodiment of the present invention.

In the embodiment shown in Fig. 4, feedback from only one previous sample is considered. The modified llr value corresponding to the current sample is determined further based on a predetermined coefficient $D_1$ corresponding to the previous sample. The predetermined coefficient $D_1$ is related to the feedback coefficient b[1], which corresponds to the previous sample used in the DFE to calculate the equalized sample corresponding to the current sample.

In Fig. 4, the original llr value corresponding to the current sample $llr_k$ is parsed into the corresponding sign $sign(llr_k)$ and magnitude $|llr_k|$. In addition, the modified llr value corresponding to the previous sample $llr_{k-1}'$ is also parsed into the corresponding sign $sign(llr_{k-1}')$ and magnitude $|llr_{k-1}'|$. The coefficient $D_1$ is first multiplied with sign $sign(llr_{k-1}')$ and the result is then multiplied with $sign(llr_k)$. The resulting value is added to $|llr_k|$, and the resulting value is then sent through a rectifier unit which sets negative values to 0, and which corresponds to the max(.,0) function. The resulting value is then added to $|llr_{k-1}'|$. The thus calculated value is then compared to $|llr_k|$ and the minimum value is sent to a concatenator block, which concatenates this magnitude with the sign $sign(llr_k)$ to obtain the modified llr value corresponding to the current sample $llr_k'$. The modified llr value corresponding to the current sample $llr_k'$ is both outputted, and fed to a delay unit (a buffer) to be used to process the next llr value $llr_{k+1}$.

It should be noted that some modifications may be made to Figure 4. For instance, the rectifier block could be moved behind the addition with $\left|llr'_{k-1}\right|$, or even to after the min-block. Good approximation may still be given.

In the embodiment, the modified llr value corresponding to the current sample has a smaller or equal magnitude than a llr value corresponding to the current sample, and same sign as the llr value corresponding to the current sample. Thus, in the description, the modified llr value determined in step S230 may also be named as smoothed llr value, and the function of determining modified llr value may also be called as llr smoothing.

One advantage of the proposed technique is that it can be realized by postprocessing the DFE output. Due to its postprocessing nature, the llr smoothing technique can still be used to improve or correct the output provided by a DFE equalizer, without requiring modifications to it (knowledge of the DFE coefficients is sufficient).

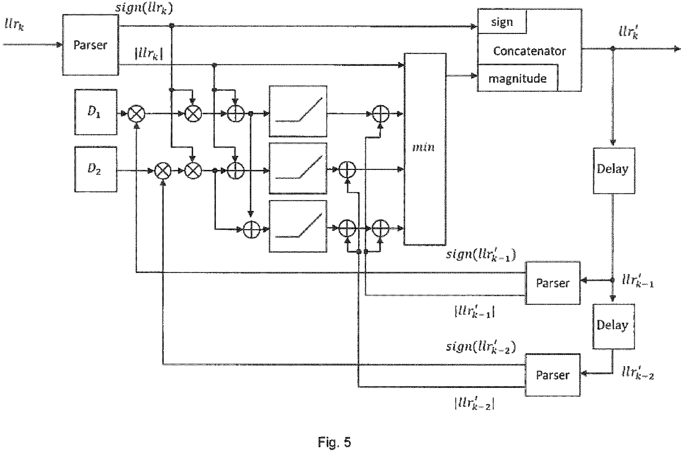

Fig. 5 shows a schematic block diagram of implementing llr smoothing according to another embodiment of the present invention.

In the embodiment shown in Fig .5, feedback from two previous sample is considered. The number of previous samples considered for determining the modified llr value corresponding to the current sample is less or equal to the number of feedback coefficients in the DFE.

In case of a DFE with N taps, llr smoothing with M taps can be applied, where $N \geq M \geq 1$. In a preferred embodiment, the M previous taps are considered during llr smoothing. In another example, the M taps for which the smoothing is applied do not have to be the first M taps but can be any set of M (different) taps of the N taps. It is preferred that the smoothing is applied to the M dominant taps (i.e., the M DFE taps with the largest magnitudes).

In the embodiment shown in Fig .5, the modified llr value corresponding to the current sample is determined further based on predetermined coefficients $D_1$ and $D_2$ respectively corresponding to each previous sample. The predetermined coefficient $D_1$ and $D_2$ are related to the feedback coefficients b[1] and b[2], which was used in the DFE for the respective previous sample to calculate the equalized sample corresponding to the current sample.

The example shown in Fig. 5 is a straightforward extension of Fig.4, where the min is taken over all the possible combinations of the different coefficients/previous llr values. Note that here again the rectifier units in Fig. 5 can be moved to reduce complexity at the cost of accuracy.

In Fig. 5, the modified llr value corresponding to the current sample $llr'_k$ may be calculated from $llr_k$ and $llr'_{k-1}$ and $llr'_{k-2}$ using the following formula:

$$llr'_k = sign(llr_k)\min\left(|llr_k|, |llr'_{k-1}| + \max(|llr_k| + sign(llr_k)sign(llr'_{k-1})D_1, 0),\right.$$
$$\left|llr'_{k-2}\right| + \max\left(|llr_k| + sign(llr_k)sign\left(llr'_{k-2}\right)D_2, 0\right),$$
$$\left.\left|llr'_{k-2}\right| + \left|llr'_{k-1}\right| + \max(|llr_k| + sign(llr_k)(sign\left(llr'_{k-1}\right)D_1 + sign\left(llr'_{k-2}\right)D_2),0)\right)$$

In other implementations, where more previous sample are considered during llr smoothing, the min operation should be applied to all possible additions of the different coefficients $D_j = 4b[j]/\sigma^2$ and the corresponding modified llr values corresponding to the previous samples.

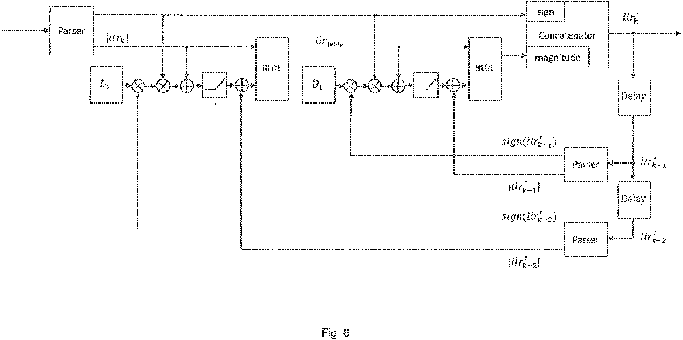

Fig. 6 shows a schematic block diagram of implementing llr smoothing according to another embodiment of the present invention.

Same as in the embodiment shown in Fig .5, feedback from two previous sample is considered in the embodiment shown in Fig. 6.

In the embodiment shown in Fig. 6, an intermediate result $llr_{temp}$ is first determined based on the llr value corresponding to the current sample $llr_k$ and the modified llr value corresponding to a previous sample that is farthest from the current sample $llr'_{k-2}$.

$$llr_{temp} = \min\left(|llr_k|, |llr'_{k-2}| + \max(|llr_k| + sign(llr_k)sign(llr'_{k-2})D_2, 0)\right)$$

Then the modified llr value corresponding to the current sample $llr'_k$ is determined based on the intermediate result $llr_{temp}$ and the modified llr value corresponding to the previous samples closest to the current sample $llr'_{k-1}$.

$$llr'_k = sign(llr_k)\min\left(llr_{temp}, |llr'_{k-1}| + \max(llr_{temp} + sign(llr_k)sign(llr'_{k-1})D_1, 0)\right)$$

The advantage of this approximation is that for N-tap smoothing, only N comparisons (min calculations) instead of $2^N$ - 1 are necessary. Or in other words, this approximation leads to a linear complexity in N instead of exponential complexity.

In another implementation, if there are more than 2 taps in the llr smoothing, a subsequent intermediate result may be determined based on a previous intermediate result, and the modified llr value corresponding to a previous sample selected according to a predetermined sequence.

In the embodiment shown in Fig. 6, the previous sample considered in the intermediate result is selected according to a sequence from the previous sample farthest from the current sample to the previous sample closest to the current sample.

In other embodiments, where at least two previous samples are considered during llr smoothing, the previous sample considered in the intermediate result may be selected according to other sequence. For example,

- from the previous sample closest to the current sample to the previous sample farthest from the current sample;
- from the previous sample corresponding to the largest predetermined coefficient in absolute value to the previous sample corresponding to the smallest predetermined coefficient in absolute value;
- from the previous sample corresponding to the smallest predetermined coefficient in absolute value to the previous sample corresponding to the largest predetermined coefficient in absolute value.

Generally, the sequence may be determined based on positions of the two previous samples or the absolute value of the predetermined coefficient ($D_1$, $D_2$) corresponding to each previous sample.

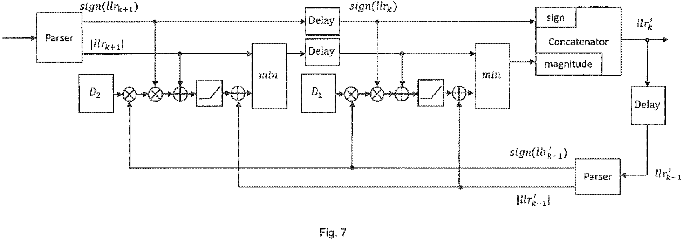

Fig. 7 shows a schematic block diagram of implementing llr smoothing according to yet another embodiment of the present invention.

Same as in the embodiment shown in Fig .5 and 6, feedback from two previous sample is considered in the embodiment shown in Fig. 7.

In this embodiment, in a time cycle prior to the time cycle shown in Fig. 7, an intermediate result $llr_{temp}$ is first determined based on the llr value corresponding to the current sample $llr_k$ and the modified llr value corresponding to a previous sample that is farthest from the current sample $llr'_{k-2}$ (not shown).

$$llr_{temp} = \min\left(|llr_k|, |llr'_{k-2}| + \max(|llr_k| + sign(llr_k)sign(llr'_{k-2})D_2, 0)\right)$$

Then in the next time sequence, as shown in Fig. 7, the modified llr value corresponding to the current sample $llr'_k$ is determined based on the intermediate result $llr_{temp}$ and the modified llr value corresponding to the previous samples closest to the current sample $llr'_{k-1}$.

$$llr'_k = sign(llr_k)\min\left(llr_{temp}, |llr'_{k-1}| + \max(llr_{temp} + sign(llr_k)sign(llr'_{k-1})D_1, 0)\right)$$

Different from Fig. 6 is that in the embodiment shown in Fig. 7, parallel to determining the modified llr value corresponding to the current sample $llr'_k$, the intermediate result for the subsequent sample is also calculated.

In another implementation, if there are more than 2 taps in the llr smoothing, the intermediate results for two or more subsequent samples shall be calculated parallel to the calculation of the modified llr value corresponding to the current sample $llr'_k$.

The advantageous of the embodiment is that it allows more parallelization and requires less buffering.

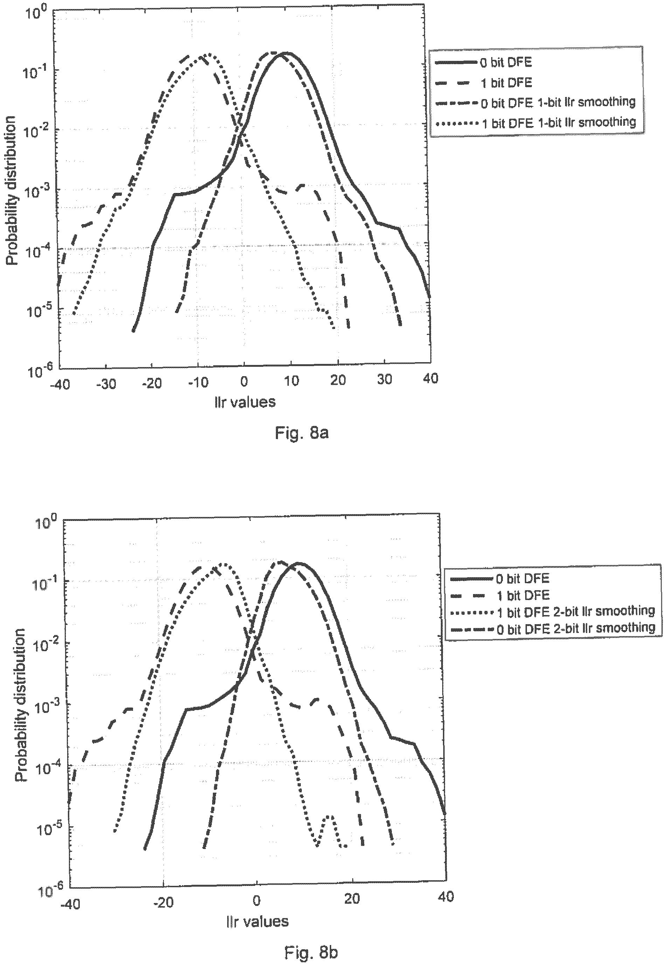

Fig. 8a and 8b show the probability distribution of llr values with and without llr smoothing.

It can be seen that 1-tap llr smoothing significantly reduces the increased tails of the llr distributions, while for 2-tap llr smoothing the distributions become very Gaussian-like.

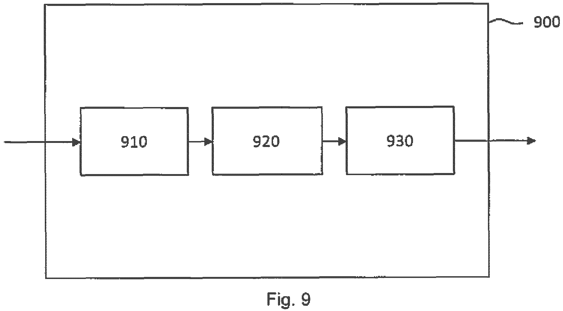

Fig. 9 shows a block diagram of receiver according to an embodiment of the present invention.

In the embodiment shown in Fig.9. the receiver 900 comprises a decision feedback equalizer 910, a determining module 920, and a decoder 930. The receiver 900 is communicatively connected to a communication link, and configured to receive binary modulated samples from the communication link.

In one embodiment, the receiver may be implemented in an ONU of a PON system. In another embodiment, the receiver may be implemented in an OLT of a PON. A skilled person shall understand, the present invention is not limited to PON, the receiver may be implemented in any communication network that receives binary modulated samples.

The decision feedback equalizer 910 is configured to perform decision feedback equalization for received samples that are binary modulated, obtaining equalized samples.

The output of DFE 910 is provided to the determining module 920, that is configured to determine a modified llr value corresponding to a current sample based at least on a value related to the equalized sample corresponding to the current sample and a respective modified llr value corresponding to at least one previous sample.

Wherein, the value related to the equalized sample corresponding to the current sample is a llr value corresponding to the current sample, or the equalized sample corresponding to the current sample.

In one example, the llr calculation may be absorbed into the DFE equalizer 910 that the DFE directly outputs llr estimates, e.g., by scaling the DFE feedforward and feedback coefficient. Alternatively, the determining module 910 may calculate the llr value based on the equalized samples, for example, by applying a multiplication with $2/\sigma^2$, and then determine the modified llr value based on the llr value.

In another example, since the llr calculation based on the AWGN channel is only a multiplication with $2/\sigma^2$, the llr smoothing can be directly applied to the output of the DFE equalizer. In that case the coefficients $D_j$ in the above equations should equal $D_j = 2b[j]$. The multiplication with $2/\sigma^2$ could then be applied on the output of the llr smoothing function to obtain the llrs.

The modified llr value corresponding to samples are then provided to the decoder 930, which is configured to decode the current sample based on the modified llr value corresponding to the current sample.

In one example, the decoder 930 may be implemented as a soft-input low-density parity check (LDPC) decoder.

Next-generation PON technologies will also utilize LDPC codes to perform forward error correction (FEC). LDPC codes are an advanced type of FEC code that achieves a higher FEC gain than more conventional Reed Solomon codes. LDPC codes have also the advantage that they can be efficiently decoded while taking into account soft information, i.e., they can be decoded taking into account the probabilities of the received bit values rather than only their hard values. Using soft-input LDPC codes gives an additional FEC gain, which is expected to be used for next-generation PON technologies.

The present invention improves the quality of the calculated llr values, thus the soft-input FEC decoder also has better performance or decoding capabilities.

In other implementations other soft-input FEC decoder may be used instead of LDPC, for example, a polar decoder, etc.

In one embodiment, the modified llr value corresponding to the current sample has a smaller or equal magnitude than a llr value corresponding to the current sample, and same sign as the llr value corresponding to the current sample.

In one embodiment, the determining module 920 is configured to determine the modified llr value corresponding to the current sample further based on a predetermined coefficient ($D_1$, $D_2$) corresponding to respective one of the at least one previous sample.

In one embodiment, the determining module 920 is configured to sequentially determine at least one intermediate result based on:

the value related to the equalized sample corresponding to the current sample or a previous intermediate result, and the modified log-likelihood ratio value corresponding to a previous sample selected from at least two previous samples according to a predetermined sequence.

The determining module 920 is further configured to determine the modified llr value corresponding to the current sample based on the last intermediate result and the modified llr value corresponding to the last sample selected from the at least two previous samples according to the predetermined sequence.

**Claims**

1. A method in a receiver of a communication link, comprising:

a) performing decision feedback equalization for received samples that are binary modulated, obtaining equalized samples;
b) determining a modified log-likelihood ratio value corresponding to a current sample based at least on a value related to the equalized sample corresponding to the current sample and a respective modified log-likelihood ratio value corresponding to at least one previous sample; and

c) decoding the current sample based on the modified log-likelihood ratio value corresponding to the current sample.

2. The method according to claim 1, wherein the modified log-likelihood ratio value corresponding to the current sample has a smaller or equal magnitude than a log-likelihood ratio value corresponding to the current sample, and same sign as the log-likelihood ratio value corresponding to the current sample.

3. The method according to claim 1 or 2, wherein the modified log-likelihood ratio value corresponding to the current sample is determined further based on a predetermined coefficient ($D_1$, $D_2$) corresponding to respective one of the at least one previous sample.

4. The method according to claim 3, wherein the predetermined coefficient ($D_1$, $D_2$) is related to the feedback coefficient (b[1], b[2]) used in the decision feedback equalization for the respective previous sample to calculate the equalized sample corresponding to the current sample.

5. The method according to any of claims 1-4, wherein the number of previous samples is less or equal to the number of feedback coefficients in the decision feedback equalization.

6. The method according to any of claims 1-5, wherein, the value related to the equalized sample corresponding to the current sample is a log-likelihood ratio value corresponding to the current sample or the equalized sample corresponding to the current sample.

7. The method according to any of claims 1-6, wherein the number of previous samples is more than 1, and step b) is implemented by:

- sequentially determining at least one intermediate result based on the value related to the equalized sample corresponding to the current sample or a previous intermediate result and the modified log-likelihood ratio value corresponding to a previous sample selected from at least two previous samples according to a predetermined sequence;

- determining the modified log-likelihood ratio value corresponding to the current sample based on the last intermediate result and the modified log-likelihood ratio value corresponding to the last sample selected from the at least two previous samples according to the predetermined sequence.

8. The method according to claim 7, wherein the predetermined sequence is determined based on positions of the at least two previous samples.

9. The method according to claims 3 and 7, wherein the predetermined sequence is determined based on the absolute values of the predetermined coefficients ($D_1$, $D_2$) corresponding to respective ones of the at least two previous samples.

10. The method according to any of claim 7 to 9, further comprising:
determining the modified log-likelihood ratio value corresponding to the current sample and intermediate results for at least one subsequent sample in parallel.

11. A receiver (900), comprising:

- a decision feedback equalizer (910), configured to perform decision feedback equalization for received samples that are binary modulated, obtaining equalized samples;

a determining module (920), configured to determine a modified log-likelihood ratio value corresponding to a current sample based at least on a value related to the equalized sample corresponding to the current sample and a respective modified log-likelihood ratio value corresponding to at least one previous sample;
a decoder (930), configured to decode the current sample based on the modified log-likelihood ratio value corresponding to the current sample.

12. The receiver (900) according to claim 11, wherein the modified log-likelihood ratio value corresponding to the current sample has a smaller or equal magnitude than a log-likelihood ratio value corresponding to the current sample, and same sign as the log-likelihood ratio value corresponding to the current sample.

13. The receiver (900) according to claim 11 or 12, wherein, the determining module (920) is configured to: determine the modified log-likelihood ratio value corresponding to the current sample further based on a predetermined coefficient (Di, $D_2$) corresponding to respective one of the at least one previous sample.

14. The receiver according to any of claims 11-13, wherein, the determining module (920) is configured to:

- sequentially determine at least one intermediate result based on:

the value related to the equalized sample corresponding to the current sample or a previous intermediate result, and
the modified log-likelihood ratio value corresponding to a previous sample selected from at least two previous samples according to a predetermined sequence;

- determine the modified log-likelihood ratio value corresponding to the current sample based on the last intermediate result and the modified log-likelihood ratio value corresponding to the last sample selected from the at least two previous samples according to the predetermined sequence.

15. An optical line terminal (110) or an optical network unit (121, 122, 123), comprising a receiver (900) according to any of claims 11-14.

Fig. 1

Fig. 2

receiving binary
modulated samples — S310

equalizating
received samples — S320

determining a modified
log-likelihood ratio
value for a current
sample — S330

decoding the current
sample based on the
modified log-likelihood
ratio value of the current
sample — S340

Fig. 3

Fig. 4

Fig. 5

Fig. 6

Fig. 7

Fig. 8a

Fig. 8b

Fig. 9

Europäisches
Patentamt

European
Patent Office

Office européen
des brevets

# EUROPEAN SEARCH REPORT

**Application Number**

EP 20 17 8433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SYLVIE PERREAU ET AL: "A Blind Decision Feedback Equalizer Incorporating Fixed Lag Smoothing", IEEE TRANSACTIONS ON SIGNAL PROCESSING, IEEE SERVICE CENTER, NEW YORK, NY, US, vol. 48, no. 5, 1 May 2000 (2000-05-01), XP011058963, ISSN: 1053-587X * Title * * abstract * * Introduction section on page 1315, right column. * * Equation (12) * * Paragraph below Equation (12) on page 1316 * * Equation 15 * * Page 1319, left column, last paragraph * * page 1319, right column, "B. Lower Bound on the Probability to Recover from an Error for a BPSK Modulation" * * Appendix A. Calculation of the approximate Log-likelihood * ----- | 1-15 | INV. H04L25/03 |
| A | US 2003/112901 A1 (GUPTA ALOK KUMAR [US]) 19 June 2003 (2003-06-19) * abstract * * figures 4,6 * ----- | 1-15 | |

TECHNICAL FIELDS
SEARCHED (IPC)

H04L

The present search report has been drawn up for all claims

| Place of search | Date of completion of the search | Examiner |
|---|---|---|
| Munich | 21 October 2020 | Murcia Martinez, J |

EPO FORM 1503 03.82 (P04C01)

**ANNEX TO THE EUROPEAN SEARCH REPORT**
**ON EUROPEAN PATENT APPLICATION NO.**                    EP 20 17 8433

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2020

| Patent document cited in search report | Publication date | Patent family member(s) | Publication date |
|---|---|---|---|
| US 2003112901 A1 | 19-06-2003 | AR        039071 A1 | 09-02-2005 |
| | | AU   2002346605 A1 | 10-06-2003 |
| | | BR      0214528 A | 28-12-2004 |
| | | CA      2468574 A1 | 05-06-2003 |
| | | CN      1615622 A | 11-05-2005 |
| | | EP      1461924 A2 | 29-09-2004 |
| | | IL       162191 A | 30-11-2010 |
| | | JP      4116562 B2 | 09-07-2008 |
| | | JP   2005510939 A | 21-04-2005 |
| | | KR  20040061005 A | 06-07-2004 |
| | | MX   PA04005171 A | 11-08-2004 |
| | | MY       137160 A | 30-01-2009 |
| | | RU      2304352 C2 | 10-08-2007 |
| | | TW      I292272 B | 01-01-2008 |
| | | US   2003112901 A1 | 19-06-2003 |
| | | WO     03047118 A2 | 05-06-2003 |
| | | ZA     200404175 B | 11-08-2005 |

For more details about this annex : see Official Journal of the European Patent Office, No. 12/82